# EUROPEAN PATENT SPECIFICATION

(11) **EP 2 381 079 B1**
(45) Date of publication and mention of the grant of the patent: **07.05.2014**
(21) Application number: 10816402.1
(22) Date of filing: 03.03.2010
(51) Int. Cl.: F02B 39/16, F02B 37/00, F02B 39/00, F02M 25/07, F04D 29/46

(54) **CONTROL DEVICE FOR INTERNAL COMBUSTION ENGINE HAVING SUPERCHARGER**
STEUERUNGSVORRICHTUNG FÜR EINEN VERBRENNUNGSMOTOR MIT SUPERLADER
DISPOSITIF DE COMMANDE POUR MOTEUR A COMBUSTION INTERNE AYANT UN SURCOMPRESSEUR

(43) Date of publication of application: 26.10.2011
(73) Proprietor: TOYOTA JIDOSHA KABUSHIKI KAISHA, Toyota-shi, Aichi-ken, 471-8571 (JP)
(72) Inventor: IWATA, Akitoshi, Toyota-shi, Aichi-ken, 471-8571 (JP); TABATA, Masakazu, Toyota-shi, Aichi-ken, 471-8571 (JP)
(74) Representative: Intès, Didier Gérard André
(86) International application number: PCT/JP2010/053468
(87) International publication number: WO 2011/108093

(56) References cited:
- EP-A1- 1 772 608
- EP-A2- 1 674 698
- DE-A1- 10 111 271
- FR-A1- 2 915 237
- JP-A- 6 323 147
- JP-A- 2006 188 989
- JP-A- 2007 154 675
- JP-A- 2007 262 971
- JP-A- 2008 255 903
- US-A1- 2005 257 520
- US-A1- 2007 214 787
- US-A1- 2008 141 671

## Description

### TECHNICAL FIELD

The present invention relates to a control apparatus for an internal combustion engine with a supercharger of which a compressor is provided with a movable vane.

### BACKGROUND ART

A supercharger having plural movable vanes at a diffuser portion of a compressor and varying supercharging efficiency by operating the movable vanes is known as a supercharger used for an internal combustion engine. There is known a control apparatus for such a supercharger to set target opening degree of movable vanes within a range not exceeding a surge limit of a compressor based on a map defining relations between rotational speed and supercharging pressure of the internal combustion engine and opening degree of the movable vanes and to control the opening degree of the movable vanes toward the target opening degree (see Patent Document 1). In addition, there are Patent Documents 2 and 3 as prior art references in relation to the present invention.

### CITATION LIST

### Patent Literature

Patent Document 1: JP-A-2007-132232
Patent Document 2: JP-A-2009-062851
Patent Document 3: JP-A-2005-214095
Patent Document 4: US 2007/0214787

### SUMMARY OF THE INVENTION

### Technical Problem

There is known an internal combustion engine in which a section of an intake passage at the upstream side from a compressor is connected to an exhaust passage with an EGR passage to enable introduction of exhaust gas to the upstream side of the compressor. In such the internal combustion engine, foreign matter such as carbon particles in exhaust gas flows into the compressor. In a compressor having movable vanes, there is a possibility that the movable vanes are locked as foreign matter flowing to the inside thereof is stuck to the movable vanes and the like. Since the position of the movable vanes cannot be varied corresponding to air quantity flowing into the compressor when the movable vanes are locked, there is a possibility that surging is apt to occur at the compressor. The control apparatus of Patent Document 1 is for a case that movable vanes are normally operated and not for a case that the movable vanes are locked as described above. There is known a control method as a control method of an internal combustion engine to control an operating state of the internal combustion engine so that output power thereof is restricted in a case of occurrence of a malfunction to cause an operational trouble of the internal combustion engine. Depending on a position where the movable vanes are locked, there is also a possibility that surging occurs at a compressor when air intake quantity is decreased to restrict the output power of the internal combustion engine.

In view of the foregoing, one object of the present invention is to provide a control apparatus for an internal combustion engine capable of suppressing occurrence of surging at a compressor while restricting output power of the internal combustion engine even when a movable vane is locked.

### Solution to Problem

A control apparatus for an internal combustion engine of the present invention is applied to an internal combustion engine including a supercharger provided with a turbine which is disposed at an exhaust passage and a compressor which is disposed at an intake passage, an EGR passage to connect the exhaust passage and a section of the intake passage at the upstream side from the compressor, and an EGR valve to open and close the EGR passage, the compressor has a movable vane mechanism capable of varying throttled quantity of a passage of intake air discharged from a compressor wheel by varying a position of a movable vane, and the control apparatus includes a abnormality determination device to determine whether or not the movable vane is locked; and a control device to control the EGR valve toward an opened side so as to increase exhaust gas quantity to be recirculated to the intake passage via the EGR passage while switching an operating state of the internal combustion engine to an emergency operating state in which output power of the internal combustion engine is restricted when the abnormality determination device determines that the movable vane is locked.

With the control apparatus for an internal combustion engine of the present invention, since exhaust gas quantity to be recirculated to the upstream side from the compressor is increased when the movable vanes are locked, the gas quantity flowing into the compressor can be increased. Surging is apt to occur at the compressor when the gas quantity flowing into the compressor is small. Therefore, it is possible to suppress occurrence of surging by increasing the gas quantity as described above. Furthermore, in this case, since the gas quantity flowing into the compressor can be increased without increasing the air quantity sucked to the internal combustion engine, it is possible to suppress the output power of the internal combustion engine at low. In this manner, according to the control apparatus of the present invention, it is possible to suppress occurrence of surging at a compressor while suppressing output power of an internal combustion engine even when the movable vane is locked.

In one embodiment of the control apparatus according to the present invention, the control apparatus may further include surge determination device to determine whether or not an operating point of the compressor to be specified by a pressure ratio between pressure at an inlet port and pressure at an outlet port of the compressor and gas flow quantity flowing into the compressor transfers into a surge zone in which surging occurs at the compressor having the movable vane locked when the operating state of the internal combustion engine is switched to the emergency operating state; wherein the control device may control the EGR valve toward the opened side so as to increase exhaust gas quantity to be recirculated to the intake passage via the EGR passage while switching the operating state of the internal combustion engine to the emergency operating state when the abnormality determination device determines that the movable vane is locked and the surge determination device determines that the operating point of the compressor transfers into the surge zone. In this embodiment, the EGR valve is controlled toward the opened side only when the movable vane is locked and the operating point of the compressor transfers into the surge zone. Accordingly, it is possible to prevent exhaust gas from being recirculated in vain to the intake passage when the internal combustion engine is operated in the emergency operating state.

In one embodiment of the control apparatus according to the present invention, the control device may control the EGR valve toward the opened side so that the exhaust gas quantity to be recirculated to the intake passage is suppressed within a flow quantity range capable of avoiding misfire of the internal combustion engine. In this case, it is possible to prevent misfire occurrence of the internal combustion engine caused by excessive recirculation of exhaust gas to the intake passage.

In one embodiment of the control apparatus according to the present invention, the movable vane mechanism may include an actuator with an output member to output power to the movable vane and a vane control device to control operation of the actuator based on the operating state of the internal combustion engine and the abnormality determination device may determine whether or not the movable vane is locked based on at least either displacement of the output member or displacement of the movable vane when the vane control device instructs the actuator to operate to vary a position of the movable vane. When the movable vane is locked, the output member and the movable vane are almost incapable of being moved even if an instruction is output to the actuator from the vane control device. Therefore, it is possible to determine whether or not the movable vane is locked based on displacement of these parts when the instruction to the actuator is output.

In one embodiment of the control apparatus according to the present invention, the compressor may be provided with a detecting device to detect a predetermined phenomenon which occurs when surging occurs at the compressor and the abnormality determination device may determine that the movable vane is locked when the predetermined phenomenon is detected by the detecting device. When the movable vane is locked, the movable vanes cannot be moved even if gas flow quantity flowing into the compressor is varied. Therefore, there is a possibility that surging occurs at the compressor. Accordingly, it is possible to determine that the movable vanes are locked when a predetermined phenomenon occurring as being accompanied by surging of the compressor is detected. The predetermined phenomenon may be at least any one of vibration of the compressor, pressure pulsation of an inlet port of the compressor, and temperature pulsation of the inlet port of the compressor.

### BRIEF DESCRIPTION OF THE DRAWINGS

FIG. 1 is a view schematically showing an internal combustion engine in which a control apparatus according to one embodiment of the present invention is incorporated.
FIG. 2 is a cross section view of a compressor of a turbocharger.
FIG. 3 is a view showing a part of the compressor viewed from an arrow III in FIG. 2.
FIG. 4 is a flowchart showing an emergency operation control routine executed by an ECU in FIG. 1.
FIG. 5 is a view showing characteristic curves of the compressor in FIG. 2.
FIG. 6 is a view showing another internal combustion engine in which the control apparatus of the present invention is applied.
FIG. 7 is a view showing another example of the compressor of the turbocharger mounted on the internal combustion engine in which the control apparatus of the present invention is applied.
FIG. 8 is a view showing characteristic curves of the compressor in FIG. 7.

### DESCRIPTION OF EMBODIMENTS

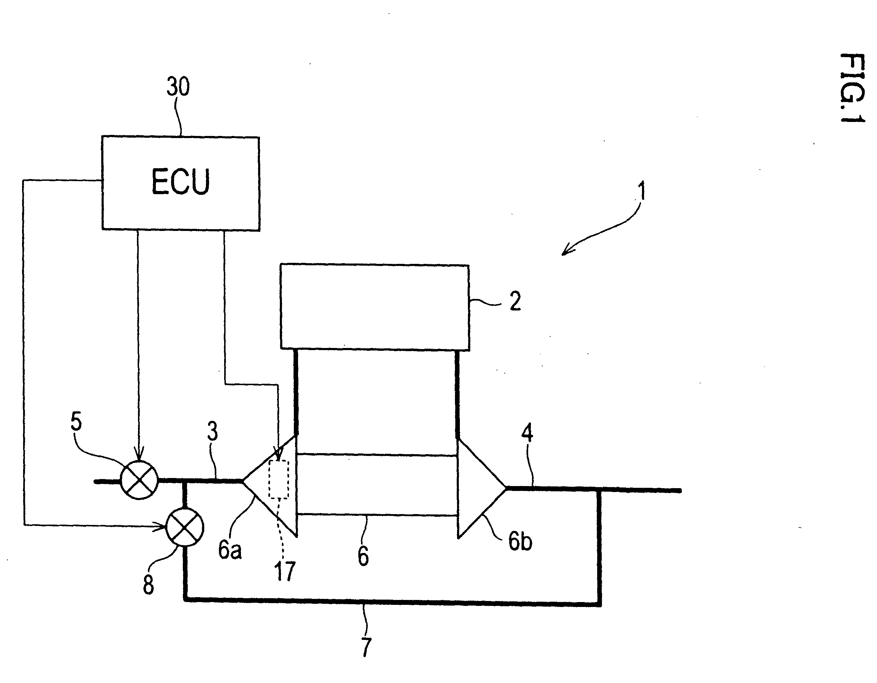

FIG. 1 schematically shows an internal combustion engine in which a control apparatus according to one embodiment of the present invention is incorporated. The internal combustion engine (hereinafter, referred to as an engine) 1 is mounted on a vehicle as a traveling power source and includes an engine main body 2 having plural cylinders (not shown). An intake passage 3 and an exhaust passage 4 are connected to each cylinder. The intake passage 3 is provided with a throttle valve 5 and a compressor 6a of a turbocharger 6. The exhaust passage 4 is provided with a turbine 6b of the turbocharger 6. The engine 1 includes a low-pressure EGR passage 7 to recirculate a part of exhaust gas as EGR gas. As shown in this figure, the low-pressure EGR passage 7 connects a section of the intake passage 3 at the upstream side from the compressor 6a and a section of the exhaust passage 4 at the downstream side from the turbine 6b. The low-pressure EGR passage 7 is provided with a low-pressure EGR valve 8 to open and close the passage 7.

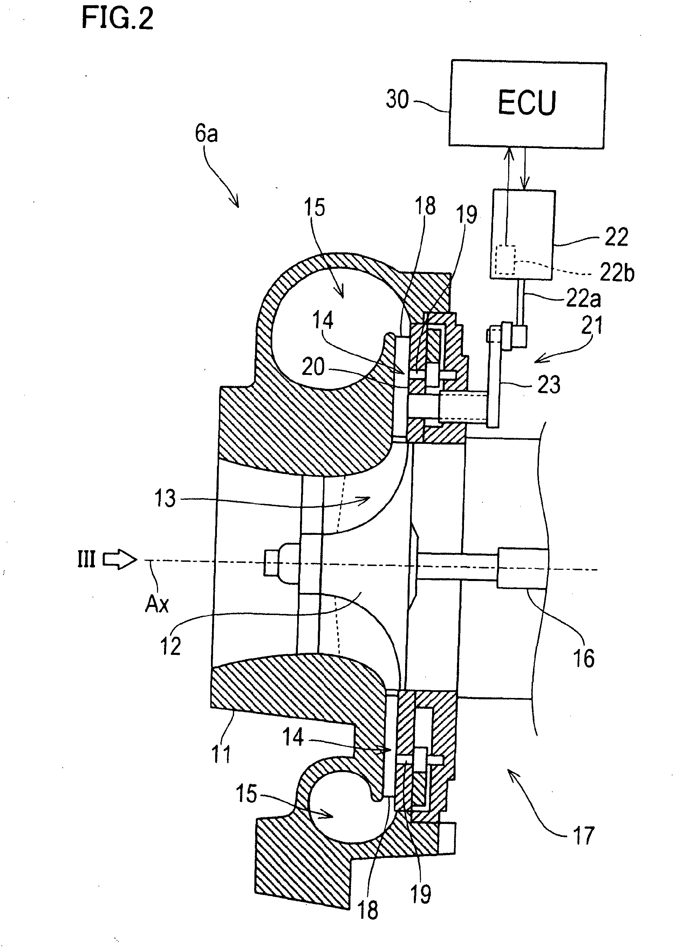

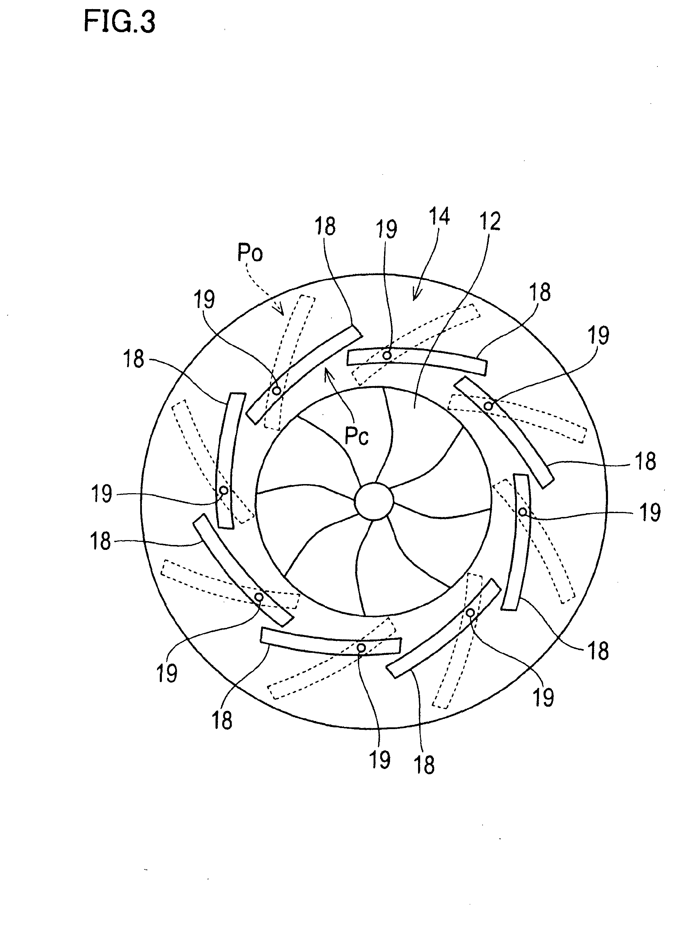

The compressor 6a of the turbocharger 6 will be described with reference to FIGS. 2 and 3. FIG. 2 is a sectional view of the compressor 6a. FIG. 3 is a view of a part of the compressor 6a viewed from an arrow III in FIG. 2. As shown in FIG. 2, the compressor 6a includes a compressor housing 11 and a compressor wheel 12 accommodated in the compressor housing 11. The compressor housing 11 includes a wheel chamber 13 in which the compressor wheel 12 is arranged, a diffuser portion 14 which is disposed at the outer circumference of the wheel chamber 13 as being communicated with an outlet of the wheel chamber 13, a spiral-shaped scroll chamber 15 which is disposed at the outer circumference of the diffuser portion 14 as being communicated with the diffuser portion 14. The compressor wheel 12 is attached to one end of a rotating shaft 16 which is arranged rotatably about an axis Ax. A turbine wheel (not shown) of the turbine 6b is attached to the other end of the rotating shaft 16. When the turbine wheel is driven by exhaust gas, the compressor wheel 12 is driven thereby.

The compressor 6a is provided with a movable vane mechanism 17. The movable vane mechanism 17 includes plural diffuser vanes (hereinafter, sometimes referred to as vanes in brief) 18 which are arranged at the diffuser portion 14, a base plate 20 to which the plural vanes 18 are attached as being rotatable about a pin 19 as a shaft portion, and a vane operating mechanism 21 which is arranged at the back face side of the base plate 20. The vanes 18 are components respectively having a well-known airfoil-shape to direct intake air flow. Intake air discharged from the compressor wheel 12 flows in between the respective vanes 18. Thus, space between the vanes 18 is to be a flow passage of intake air. Each vane 18 is attached to one end of the pin 19 rotatably in an integrated manner. As shown in FIG. 3, the pins 19 are arranged at regular intervals in the circumferential direction. The vanes 18 are rotated respectively about the pin 19 thereof, so that the vanes 18 are rotated to open and close the passage of intake air therebetween. Thus, throttled quantity of the passage of intake air is varied thereby.

The vane operating mechanism 21 includes an actuator 22 having an output shaft 22a as an output member and a power transmission mechanism 23 to transmit power output from the output shaft 22a to the respective vanes 18. The power transmission mechanism 23 is a well-known mechanism to include a drive ring (not shown) to be rotated about an axial line Ax by the actuator 22, thereby converting rotational motion of the drive ring into rotational motion of each vane 18 having the pin 19 therefor as its axis. Here, detailed description thereof will be omitted. The actuator 22 drives each vane 18 via the power transmission mechanism 23 between a closed position P_{c} indicated by a solid line and an opened position Pₒ indicated by a dotted line in FIG. 3. The space between the respective vanes 18 is the minimum at the closed position P_{c} and the space between the respective vanes 18 is the maximum at the opened position Pₒ. A displacement sensor 22b to output a signal corresponding to displacement of the output shaft 22a is disposed at the actuator 22.

The operation of the low-pressure EGR valve 8 is controlled by an engine control unit (hereinafter, referred to as an ECU) 30. The ECU 30 is a computer unit which includes a microprocessor and peripheral devices such as a RAM and a ROM as being necessary for the operation thereof. The ECU 30 controls the engine 1 to be in a targeted operating state by controlling the throttle valve 5, the actuator 22 and the like in accordance with a predetermined control program. The ECU 30 controls the operation of the actuator 22 so that the position of each vane 18 is varied toward the opened position Pₒ side in accordance with increase of intake air quantity, for example. In this manner, by controlling the operation of the actuator 22, the ECU 30 functions as a vane control device of the present invention. Furthermore, in a case of occurrence of a malfunction to cause an operational trouble of the engine 1, the ECU 30 controls the throttle valve 5 toward the closed side so that the operating state of the engine 1 is switched to an emergency operating state in which output power of engine 1 is restricted. Although not shown, various sensors for determining the operating state of the engine 1 are connected to the ECU 30. Furthermore, the abovementioned displacement sensor 22b is connected to the ECU 30.

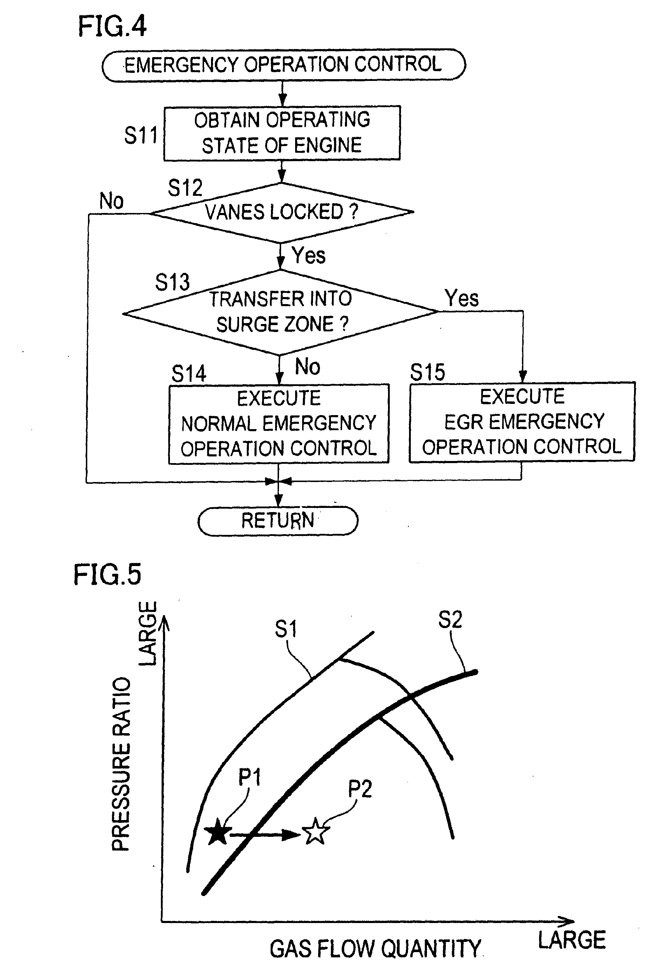

FIG. 4 shows an emergency operation control routine which is repeatedly executed by the ECU 30 at predetermined intervals during operation of the engine 1 to control the operating state of the engine 1. In this control routine, first, the ECU 30 obtains the operating state of the engine 1 in step S11. For example, the ECU 30 obtains a supercharging pressure as the operating state of the engine 1. Furthermore, the ECU 30 obtains displacement of the output shaft 22a of the actuator 22 in this process.

In next step S12, the ECU 30 determines whether or not the vanes 18 are locked. When the vanes 18 are locked, the output shaft 22a connected to the vanes 18 via the power transmission mechanism 23 becomes almost incapable of being operated as well. Accordingly, the determination of whether or not the vanes 18 are locked may be performed based on displacement of the output shaft 22a at the time when the ECU 30 provides an instruction of operation to the actuator 22 so as to vary the position of each vane 18, for example. Then, it may be determined that the vanes 18 are locked when the displacement of the output shaft 22a at that time is equal to or smaller than a specific value which is previously set. When the ECU 30 determined that the vanes 18 are not locked, the ECU 30 ends the present control routine.

On the other hand, when the ECU 30 determined that the vanes 18 are locked, the ECU 30 goes to step S13 and determines whether or not an operating point of the compressor 6a transfers into a surge zone in the case of switching the operating state of the engine 1 to the emergency operating state. FIG. 5 shows characteristic curves of the compressor 6a. A pressure ratio in this figure denotes a ratio between pressure at an inlet port of the compressor 6a and pressure at an outlet port of the compressor 6a. Furthermore, the solid line S1 in this figure indicates a surge line of the compressor 6a when the vanes 18 are located at the closed position P_{c} and the solid line S2 indicates a surge line of the compressor 6a when the vanes 18 are located at the opened position Pₒ. That is, the surge line of the compressor 6a is varied in the range between the solid line S1 and the solid line S2 by varying the position of the vanes 18. The surge zone is at the left side from each surge line in this figure. For example, in the case that the operating point of the compressor 6a is to be at the position P1 in this figure when the vanes 18 are locked at the opened position Pₒ and the operating state of the engine 1 is switched to the emergency operating state, the ECU 30 determines that the operating point of the compressor 6a transfers into the surge zone. Since the surge zone is varied in accordance with the locked position of the vanes 18, the surge zone of the compressor 6a is specified firstly based on this figure in this process. Thereafter, it is determined whether or not the operating point of the compressor 6a transfers into the specified surge zone when the operating state of the engine 1 is switched to the emergency operating state. Here, the characteristic curves of the compressor 6a shown in FIG. 5 may be obtained in advance through experiments or the like and stored in the ROM of the ECU 30 as a map.

When the ECU 30 determined that the operating point of the compressor 6a does not transfer into the surge zone, the ECU 30 goes to step S14 and executes a normal emergency operation control to switch the operating state of the engine 1 to the emergency operating state. In the normal emergency operation control, the output power of the engine 1 is restricted by controlling the throttle valve 5 toward the closed side while closing the low-pressure EGR valve 8. Thereafter, the ECU 30 ends the present control routine.

On the other hand, when the ECU 30 determined that the operating point of the compressor 6a transfers into the surge zone, the ECU 30 goes to step S15 and executes an EGR emergency operation control. In the EGR emergency operation control, the output power of the engine 1 is restricted by controlling the throttle valve 5 toward the closed side while increasing EGR gas quantity as controlling the low-pressure EGR valve 8 toward the opened side. At that time, as indicated by point P2 in FIG. 5, the ECU 30 controls opening degree of the low-pressure EGR valve 8 so that the operating point of the compressor 6a falls out from the surge zone by increasing gas flow quantity to be sucked into the compressor 6a with the EGR gas. Furthermore, the ECU 30 controls the opening degree of the low-pressure EGR valve 8 so that the EGR gas is introduced within a range of the flow quantity enabling to avoid misfire of the engine 1. Thereafter, the ECU 30 ends the present control routine.

As described above, according to the control apparatus of the present invention, in the case that the operating point of the compressor 6a transfers into the surge zone when the vanes 18 are locked and the operating state of the engine 1 is switched to the emergency operating state, occurrence of surging at the compressor 6a can be prevented by increasing the EGR gas quantity as opening the low-pressure EGR valve 8. Furthermore, the gas flow quantity to be sucked to the compressor 6a can be increased without increasing air quantity sucked to the engine 1 by increasing the EGR gas quantity as described above. Accordingly, the output power of the engine 1 can be suppressed at low. Thus, according to the control apparatus, occurrence of surging at the compressor 6a can be suppressed while restricting the output power of the engine 1 even when the vanes 18 are locked. The ECU 30 functions as an abnormality determination device of the present invention by executing step S12 of the control routine in FIG. 4 and functions as a control device of the present invention by executing step S15. Furthermore, the ECU 30 functions as a surge determination device of the present invention by executing step S13.

The present invention is not limited to the above-described embodiment, and may be embodied in various forms.

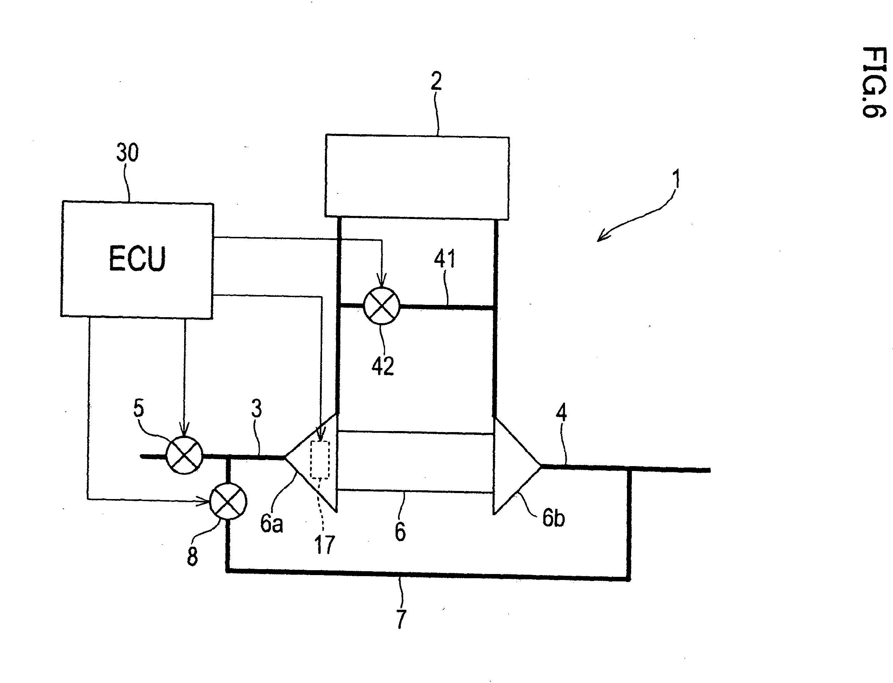

For example, the engine to which the control apparatus of the present invention is applied is not limited to the engine shown in FIG. 1. The control apparatus of the present invention may be applied to an engine 1 which is provided with a high-pressure EGR passage 41 connecting a section of the intake passage 3 at the downstream side from the compressor 6a and a section of the exhaust passage 4 at the upstream side from the turbine 6b in addition to the low-pressure EGR passage 7 as shown in FIG. 6. Here, the same members in FIG. 6 as those in Fig. 1 are denoted by the same numerals, and the description thereof will be omitted. As shown in this figure, the high-pressure EGR passage 41 is provided with a high-pressure EGR valve 42 to open and close the passage 41. In the engine 1 as well, the gas flow quantity sucked to the compressor 6a can be increased without increasing the air quantity sucked to the engine 1 as the ECU 30 executes the above control routine in FIG. 4. Accordingly, occurrence of surging at the compressor 6a can be suppressed while restricting the output power of the engine 1 even when the movable vanes are locked. Here, in this engine 1, it is also possible to control opening of the high-pressure EGR valve 42 toward the closed side or to control opening of the throttle valve 5 toward the opened side within a range having no influence of the EGR emergency operation control to the emergency operating state of the engine 1. Accordingly, since rotational speed of the turbocharger 6 is increased and the intake air quantity is increased, occurrence of surging can be further suppressed.

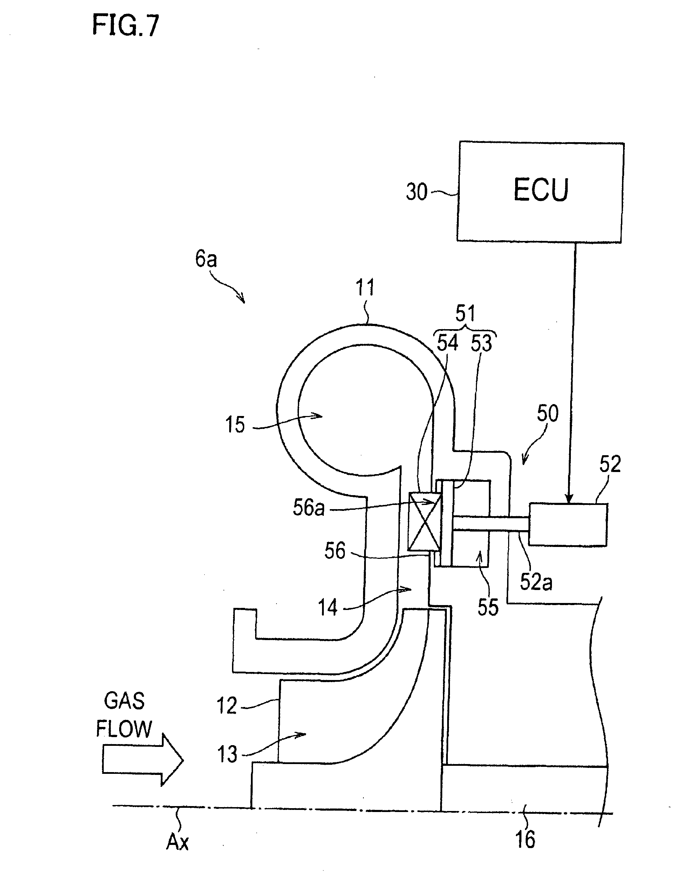

Furthermore, it is also possible that a movable vane mechanism being different from that described in the above embodiment is disposed to the compressor 6a of the turbocharger 6 of the engine 1 to which the present invention is applied. For example, a movable vane mechanism 50 shown in FIG. 7 may be disposed to the compressor 6a. Here, the same members in FIG. 7 as those in Fig. 2 are denoted by the same numerals, and the description thereof will be omitted. The movable vane mechanism 50 includes a movable portion 51 arranged movably in a direction of the axis Ax and an actuator 52 to drive the movable portion 51. The movable portion 51 includes a circular base plate 53 and plural vanes 54 arranged at the base plate 53. Here, FIG. 7 shows only one vane. The plural vanes 54 are arranged at the base plate 53 as being aligned concyclically at regular intervals. Furthermore, as shown in this figure, the respective vanes 54 are arranged as being extended in the direction of the axis Ax from the same surface of the base plate 53. Here, the shape of the vanes 54 is airfoil-shaped similarly to the above embodiment.

The compressor housing 11 of the compressor 6a shown in Fig. 7 includes an accommodating chamber 55 as being aligned the diffuser portion 14 in the direction of the axis Ax. The diffuser portion 14 and the accommodating chamber 55 are partitioned with a partition wall 56 which forms a part of the diffuser portion 14. Through holes 56a are formed at the partition wall 56 corresponding to the plural vanes 54. The movable portion 51 is accommodated in the accommodating chamber 55 so that the vanes 54 are inserted respectively to the through holes 56a. Furthermore, the movable portion 51 is accommodated in the accommodation chamber 55 as being movable between a stored position where each vane 54 is stored in the partition wall 56 and a protruded position where each vane 54 is protruded from the partition wall 56 as traversing the diffuser portion 14. The actuator 52 drives the movable portion 51 between the stored position and the protruded position by elongating and contracting a rod 52a as the output member.

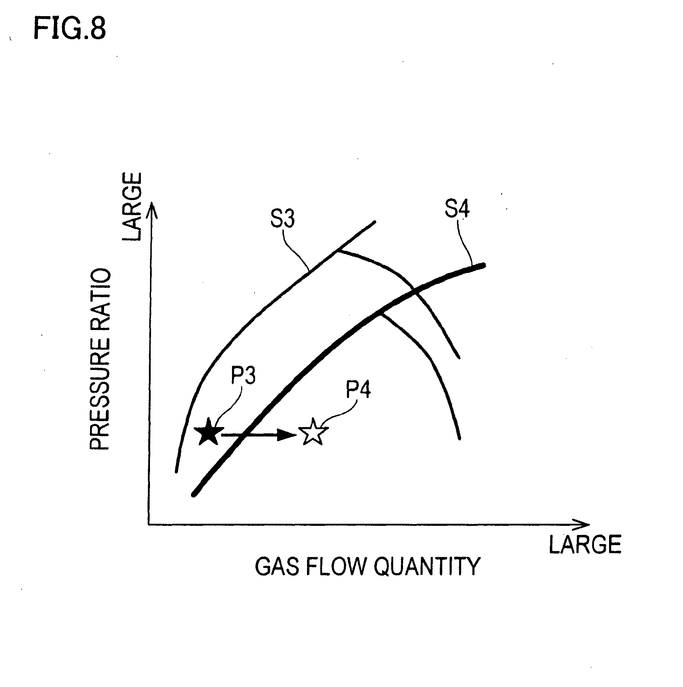

FIG. 8 shows characteristic curves of the compressor 6a shown in Fig. 7. The solid line S3 in this figure indicates a surge line of the compressor 6a when the vanes 54 are located at the protruded position and the solid line S4 indicates a surge line of the compressor 6a when the vanes 54 are located as the stored position. Then, the surge zone of the compressor 6a is at the left side from each surge line in this figure. With the compressor 6a, there is a possibility that the operating point of the compressor 6a transfers into the surge zone when the vanes 54 are locked at the stored position and the operating state of the engine 1 is switched to the emergency operating state. The gas flow quantity sucked to the compressor 6a can be increased without increasing air quantity sucked to the engine 1 by also applying the present invention to the engine 1 having the compressor 6a disposed to the intake passage 3. Thus, the operating point of the compressor 6a can be varied to the position P4 in this figure. Accordingly, occurrence of surging at the compressor 6a can be suppressed while restricting the output power of the engine 1 even when the vanes 54 are locked. Here, in the compressor 6a, it is also possible to arrange a stroke sensor which outputs a signal corresponding to stroke quantity of the rod 52a at the actuator 52 and to determine whether or not the vanes 54 are locked based on the output of the stroke sensor. For example, it is possible to determine that the vanes 54 are locked in the case of very little variation of the output value of the stroke sensor when the ECU 30 provides an instruction of operation to the actuator 52 to switch the position of the vanes 54.

In the present invention, the method to determine whether or not the vanes are locked is not limited to the method to perform determination based on the displacement of the output shaft or the rod of the actuator. For example, it is also possible to arrange a sensor which outputs a signal corresponding to a vane position at a compressor and to determine whether or not the vanes are locked based on an output value of the sensor when the ECU provides an instruction of operation to the actuator. Furthermore, it is also possible to determine that vanes are locked when a predetermined phenomenon occurring as being accompanied by surging is detected. For example, the predetermined phenomenon may be vibration of the compressor 6a, pressure pulsation at the inlet port of the compressor 6a, temperature pulsation at the inlet port of the compressor 6a and the like. Here, it is also possible to arrange a vibration sensor at the compressor 6a and to determine whether or not the vanes are locked based on an output signal of the vibration sensor. Additionally, it is also possible to arrange a pressure sensor at the inlet port of the compressor 6a and to determine whether or not the vanes are locked based on an output signal of the pressure sensor. Furthermore, it is also possible to arrange a temperature sensor at the inlet port of the compressor 6a and to determine whether or not the vanes are locked based on an output signal of the temperature sensor. The vibration sensor, the pressure sensor or the temperature sensor corresponds to detecting device of the present invention as detecting the predetermined phenomenon as described above.

## Claims

1. A control apparatus for an internal combustion (1) engine including a supercharger (6) provided with a turbine (6b) which is disposed at an exhaust passage (4) and a compressor (6a) which is disposed at an intake passage (3), an EGR passage (7) to connect the exhaust passage (4) and a section of the intake passage (3) at the upstream side from the compressor (6a), and an EGR valve (8) to open and close the EGR passage (7), the compressor (6a) has a movable vane mechanism (17, 50) capable of varying throttled quantity of a passage of intake air discharged from a compressor wheel (12) by varying a position of a movable vane (18, 54), the control apparatus being **characterized in that** it comprises:
an abnormality determination device to determine whether or not the movable vane (18, 54) is locked;
a surge determination device to firstly specify a surge zone in which surging occurs out of an operating zone of the compressor (6a) having the movable vane (18, 54) locked and to subsequently determine whether or not an operating point of the compressor (6a) to be specified by a pressure ratio between pressure at an inlet port and pressure at an outlet port of the compressor (6a) and gas flow quantity flowing into the compressor (6a) moves into the specified surge zone when an operating state of the internal combustion engine (1) is switched to an emergency operating state in which output power of the internal combustion engine (1) is restricted; and
a control device to control the EGR valve (8) toward an opened side so as to increase exhaust gas quantity to be recirculated to the intake passage (3) via the EGR passage (7) while switching the operating state of the internal combustion engine (1) to the emergency operating state when the abnormality determination device determines that the movable vane (18, 54) is locked and the surge determination device determines that the operating point of the compressor (6a) moves into the surge zone, and to close the EGR valve (8) while switching the operating state of the internal combustion engine (1) to the emergency operating state when the abnormality determination device determines that the movable vane (18, 54) is locked and the surge determination device determines that the operating point of the compressor (6a) does not move into the surge zone.

2. The control apparatus for an internal combustion engine according to claim 1,
wherein the control device controls the EGR valve (8) toward the opened side so that the exhaust gas quantity to be recirculated to the intake passage (3) is suppressed within a flow quantity range capable of avoiding misfire of the internal combustion engine (1).

3. The control apparatus for an internal combustion engine according to claim 1 or 2,
wherein the movable vane mechanism (17, 50) includes an actuator (22, 52) with an output member (22a, 52a) to output power to the movable vane (18, 54) and a vane control device to control operation of the actuator (22, 52) based on the operating state of the internal combustion engine (1); and
the abnormality determination device determines whether or not the movable vane (18, 54) is locked based on at least either displacement of the output member (22a, 52a) or displacement of the movable vane (18, 54) when the vane control device instructs the actuator (22, 52) to operate to vary a position of the movable vane (18, 54).

4. The control apparatus for an internal combustion engine (1) according to claim 1 or 2,
wherein the compressor (6a) is provided with a detecting device to detect a predetermined phenomenon which occurs when surging occurs at the compressor (6a); and
the abnormality determination device determines that the movable vane (18, 54) is locked when the predetermined phenomenon is detected by the detecting device.

5. The control apparatus for an internal combustion engine (1) according to claim 4,
wherein the predetermined phenomenon is at least any one of vibration of the compressor (6a), pressure pulsation of an inlet port of the compressor (6a), and temperature pulsation of the inlet port of the compressor (6a).

## Patentansprüche

1. Steuervorrichtung für einen Verbrennungsmotor (1), der einen Lader (6) aufweist, der mit einer Turbine (6b) versehen ist, die an einer Abgaspassage (4) angeordnet ist, und einen Kompressor (6a), der an einer Ansaugpassage (3) angeordnet ist, eine AGR-Passage (7), um die Abgaspassage (4) und einen Abschnitt der Ansaugpassage (3) an der stromaufwärtigen Seite des Kompressors (6a) zu verbinden, und ein AGR-Ventil (8), um die AGR-Passage (7) zu öffnen und zu schließen, wobei der Kompressor (6a) einen beweglichen Leitschaufelmechanismus (17, 50) aufweist, der fähig ist, die gedrosselte Menge einer Passage der Ansaugluft, die von einem Verdichterrad (12) ausgeladen wird zu variieren, indem eine Position einer beweglichen Leitschaufel (18, 54) variiert wird, wobei die Steuervorrichtung dadurch charakterisiert ist, dass sie umfasst:
eine Anomaliebestimmungsvorrichtung zum Bestimmen, ob die bewegliche Leitschaufel (18, 54) blockiert ist oder nicht,
eine Druckstoßbestimmungsvorrichtung, um zuerst eine Druckstoßzone zu bestimmen, in der Druckstöße in einem Betriebsbereich des Kompressors (6a), bei dem die bewegliche Leitschaufel blockiert ist, auftreten, und um anschließend zu bestimmen, ob sich ein Betriebspunkt des Kompressors (6a), der durch ein Druckverhältnis zwischen dem Druck an einer Einlassöffnung und dem Druck an einer Auslassöffnung des Kompressors (6a) und durch eine Gasdurchflussmenge, die in den Kompressor (6a) strömt, zu bestimmen ist, in die bestimmte Druckstoßzone bewegt, wenn ein Betriebszustand des Verbrennungsmotors (1) auf einen Notbetriebszustand umgeschaltet wird, bei dem die Ausgangsleistung des Verbrennungsmotors (1) eingeschränkt ist, und
eine Steuervorrichtung zum Steuern des AGR-Ventils (8) zu einer geöffneten Seite, um die Abgasmenge, die durch die Ansaugpassage (3) über die AGR-Passage (7) zurückzuführen ist, zu steigern, während der Betriebszustand des Verbrennungsmotors (1) auf den Notbetriebszustand umgeschaltet wird, wenn die Anomaliebestimmungsvorrichtung bestimmt, dass die bewegliche Leitschaufel (18, 54) blockiert ist und die Druckstoßbestimmungsvorrichtung bestimmt, dass sich der Betriebspunkt des Kompressors (6a) in den Pumpbereich bewegt, und das AGR-Ventil (8) zu schließen, während der Betriebszustand des Verbrennungsmotors (1) auf den Notbetriebszustand geschaltet wird, wenn die Anomaliebestimmungsvorrichtung bestimmt, dass die bewegliche Leitschaufel (18, 54) blockiert ist und die Druckstoßbestimmungsvorrichtung bestimmt, dass sich der Betriebspunkt des Kompressors (6a) nicht in den Druckstoßbereich bewegt.

2. Steuervorrichtung für einen Verbrennungsmotor nach Anspruch 1,
wobei die Steuervorrichtung das AGR-Ventil (8) zu der geöffneten Seite steuert, so dass die Abgasmenge, die zu der Ansaugpassage (3) zurückzuführen ist, auf einen Strömungsmengenbereich limitiert wird, der in der Lage ist, ein Fehlzünden des Verbrennungsmotors (1) zu vermeiden.

3. Steuervorrichtung für einen Verbrennungsmotor nach Anspruch 1 oder 2,
wobei der bewegliche Leitschaufelmechanismus (17, 50) einen Stellantrieb (22, 52) mit einem Ausgabeelement (22a, 52a) aufweist, um Leistung zu der beweglichen Leitschaufel (18, 54) auszugeben, und eine Leitschaufelsteuervorrichtung, um den Betrieb des Stellantriebs (22, 52) basierend auf dem Betriebszustand des Verbrennungsmotors (1) zu steuern, und
die Anomaliebestimmungsvorrichtung bestimmt, ob die bewegliche Leitschaufel (18, 54) blockiert ist oder nicht, basierend entweder auf der Bewegung des Ausgabeelements (22a, 52a) oder Bewegung der beweglichen Leitschaufel (18, 54) wenn die Leitschaufelsteuervorrichtung den Stellantrieb (22, 52) anweist zu arbeiten, um eine Position der beweglichen Leitschaufel (18, 54) zu variieren.

4. Steuervorrichtung für einen Verbrennungsmotor (1) nach Anspruch 1 oder 2,
wobei der Kompressor (6a) mit einer Erfassungsvorrichtung zum Erfassen einer vorbestimmten Erscheinung versehen ist, die auftritt, wenn Druckstöße an dem Kompressor (6a) auftreten, und
die Anomaliebestimmungsvorrichtung bestimmt, dass die bewegliche Leitschaufel (18, 54) blockiert ist, wenn das vorbestimmte Ereignis von der Erfassungsvorrichtung erfasst wird.

5. Steuervorrichtung für einen Verbrennungsmotor (1) nach Anspruch 4,
wobei das vorbestimmte Ereignis eine Vibration des Kompressors (6a) und/oder Druckpulsation einer Einlassöffnung des Kompressors (6a) und/oder Temperaturpulsation der Einlassöffnung des Kompressors (6a) ist.

## Revendications

1. Appareil de commande pour un moteur à combustion interne (1) comprenant un dispositif d'admission forcée (6) prévu avec une turbine (6b) qui est disposée dans un passage d'échappement (4) et un compresseur (6a) qui est disposé dans un passage d'admission (3), un passage de recirculation des gaz d'échappement (7) pour raccorder le passage d'échappement (4) et une section du passage d'admission (3) au niveau du côté en amont par rapport au compresseur (6a) et une soupape de recirculation des gaz d'échappement (8) pour ouvrir et fermer le passage de recirculation des gaz d'échappement (7), le compresseur (6a) a un mécanisme d'aube mobile (17, 50) pouvant modifier la quantité étranglée d'un passage d'air d'admission déchargé d'une roue de compresseur (12) en modifiant une position d'une aube mobile (18, 54), l'appareil de commande étant **caractérisé en ce qu'**il comprend :
un dispositif de détermination d'anomalie pour déterminer si l'aube mobile (18, 54) est bloquée ou pas ;
un dispositif de détermination de surpression pour spécifier premièrement une zone de surpression dans laquelle la surpression se produit hors d'une zone opérationnelle du compresseur (6a) ayant l'aube mobile (18, 54) verrouillée et pour déterminer consécutivement si un point de fonctionnement du compresseur (6a) à spécifier par un rapport de pression entre la pression au niveau d'un orifice d'entrée et la pression au niveau d'un orifice de sortie du compresseur (6a) et la quantité d'écoulement de gaz s'écoulant dans le compresseur (6a) se déplace dans la zone de surpression spécifiée ou pas lorsqu'un état de fonctionnement du moteur à combustion interne (1) passe dans un état de fonctionnement d'urgence dans lequel la puissance de sortie du moteur à combustion interne (1) est limitée ; et
un dispositif de commande pour commander la soupape de recirculation des gaz d'échappement (8) vers un côté ouvert afin d'augmenter la quantité de gaz d'échappement à recirculer vers le passage d'admission (3) via le passage de recirculation des gaz d'échappement (7) tout en faisant passer l'état de fonctionnement du moteur à combustion interne (1) à l'état de fonctionnement d'urgence lorsque le dispositif de détection d'anomalie détermine que la pale mobile (18, 54) est bloquée et que le dispositif de détermination de surpression détermine que le point de fonctionnement du compresseur (6a) se déplace dans la zone de surpression, et pour fermer la soupape de recirculation des gaz d'échappement (8) tout en faisant passer l'état de fonctionnement du moteur à combustion interne (1) à l'état de fonctionnement d'urgence lorsque le dispositif de détermination d'anomalie détermine que la pale mobile (18, 54) est bloquée et que le dispositif de détermination de surpression détermine que le point de fonctionnement du compresseur (6a) ne se déplace pas dans la zone de surpression.

2. Appareil de commande pour un moteur à combustion interne selon la revendication 1,
dans lequel le dispositif de commande commande la soupape de recirculation des gaz d'échappement (8) vers le côté ouvert de sorte que la quantité de gaz d'échappement à recirculer vers le passage d'admission (3) est réprimée dans les limites d'une plage de quantité d'écoulement pouvant éviter le raté d'allumage du moteur à combustion interne (1).

3. Appareil de commande pour un moteur à combustion interne selon la revendication 1 ou 2,
dans lequel le mécanisme de pale mobile (17, 50) comprend un actionneur (22, 52) avec un élément de sortie (22a, 52a) pour transmettre la puissance à l'aube mobile (18, 54) et un dispositif de commande d'aube pour commander le fonctionnement de l'actionneur (22, 52) en fonction de l'état de fonctionnement du moteur à combustion interne (1) ; et
le dispositif de détermination d'anomalie détermine si l'aube mobile (18, 54) est bloquée ou pas en fonction d'au moins le déplacement de l'élément de sortie (22a, 52a) ou le déplacement de l'aube mobile (18, 54) lorsque le dispositif de commande d'aube donne l'instruction à l'actionneur (22, 52) de fonctionner pour modifier une position de l'aube mobile (18, 54).

4. Appareil de commande pour un moteur à combustion interne (1) selon la revendication 1 ou 2,
dans lequel le compresseur (6a) est prévu avec un dispositif de détection pour détecter un phénomène prédéterminé qui se produit lorsque la surpression a lieu au niveau du compresseur (6a) ; et
le dispositif de détermination d'anomalie détermine que la pale mobile (18, 54) est bloquée lorsque le phénomène prédéterminé est détecté par le dispositif de détection.

5. Appareil de commande pour un moteur à combustion interne (1) selon la revendication 4,
dans lequel le phénomène prédéterminé est au moins l'un quelconque parmi la vibration du compresseur (6a), l'impulsion de pression d'un orifice d'entrée du compresseur (6a) et l'impulsion de température de l'orifice d'entrée du compresseur (6a).
